# EUROPÄISCHE PATENTSCHRIFT

(11) **EP 2 548 931 B1**
(45) Veröffentlichungstag und Bekanntmachung des Hinweises auf die Patenterteilung: **03.04.2019**
(21) Anmeldenummer: 12174444.5
(22) Anmeldetag: 29.06.2012
(51) Int. Cl.: C09J 5/06, B23K 13/01, H05B 6/10, H05B 6/36

(54) **Verfahren zum Herstellen einer Klebverbindung mit einem hitzeaktivierbaren Kleber mittels Induktionserwärmung**
Method for producing an adhesive bond with a heat-reactive adhesive by means of induction heating
Procédé destiné à la fabrication d'un joint de colle avec une colle activable thermiquement moyennant un réchauffement par induction

(30) Priorität: 22.07.2011 DE 102011079685
(43) Veröffentlichungstag der Anmeldung: 23.01.2013
(73) Patentinhaber: tesa SE, 22848 Norderstedt (DE)
(72) Erfinder: Keite-Telgenbüscher, Klaus, 22529 Hamburg (DE); Engeldinger, Hans-Karl, 25451 Quickborn (DE); Grünauer, Judith, 22117 Hamburg (DE); Lammel, Christian, 85737 Ismaning (DE)

(56) Entgegenhaltungen:
- WO-A1-2012/019909
- WO-A2-2011/051097

## Beschreibung

Hitzeaktivierbare Folien (HAF) werden eingesetzt, um hochfeste Verbindungen von Fügeteilen zu erreichen. Insbesondere eignen sich solche Systeme, um bei einer geringeren Klebefugendicke gleiche oder höhere Festigkeiten als Haftklebersysteme zu erreichen. Dies ist insbesondere für die weiter fortschreitende Miniaturisierung von elektronischen Geräten, insbesondere im Bereich der Konsumgüterelektronik wie der Unterhaltungs- und Kommunikationselektronik (z.B. Mobiltelefone, PDAs, Laptops, Displays, Digitakameras, PCs, Digitalreader) ein wichtiger Aspekt.

Insbesondere für portable Konsumgüterelektronikartikel (mobile elektronische Geräte), also solche elektronischen, im üblichen räumlich kleinen Artikel, die der Anwender für gewöhnlich bei sich trägt (wie Mobiltelefone oder PDAs) oder die anderweitig mitgeführt werden (Laptops und dergleichen), steigen stetig die Anforderungen. Zum einen werden diese Artikel immer kleiner, so dass damit auch die Verklebungsflächen geringer werden. Zum anderen muss die Verklebung zusätzliche Anforderungen erfüllen, da portable Artikel in einem grösseren Temperaturbereich eingesetzt werden und zudem mechanischer Belastung (Stösse, Stürze usw.) ausgesetzt werden können.

So werden für Verbindungen, die auch bei hohen Temperaturen starken Belastungen ausgesetzt sind, bevorzugt solche Klebemassen eingesetzt, die bei Raumtemperatur keine oder geringe Eigenklebrigkeit aufweisen, sondern erst unter Einwirkung von Hitze die für eine Verklebung erforderliche Klebkraft zu den Substraten aufbauen. Derartige Hitze-aktivierbare Klebemassen liegen häufig bei Raumtemperatur in fester Form vor und können bei der Verklebung durch Temperatureinwirkung sowie gegebenenfalls durch zusätzlichen Druck entweder reversibel oder irreversibel in einen Zustand hoher Klebkraft überführt werden. Reversible Hitze-aktivierbare Klebemassen sind etwa solche auf der Basis thermoplastischer Polymere, wohingegen als irreversible Klebemassen zum Beispiel Reaktivklebemassen verwendet werden, in denen thermisch aktivierbare chemische Reaktionen auftreten, etwa Vernetzungsreaktionen, so dass diese besonders für die permanente hochfeste Verklebung von Substraten geeignet sind.

Allen dieser hitzeaktivierbaren Klebemassensysteme ist gemeinsam, dass sie zum Verkleben stark erhitzt werden müssen. Unter diesen Bedingungen werden innerhalb der Klebemasseschicht jedoch häufig auch gasförmige oder flüssige Substanzen wie etwa Wasser, auch Wasserdampf, oder Luft freigesetzt, die etwa als Nebenprodukte einer Vernetzungsreaktion entstehen können, beispielsweise bei einer Kondensationsreaktion, oder die bei Raumtemperatur in der Polymermatrix adsorbiert vorliegen und beim Erhitzen desorbieren. Die so freigesetzten Mengen an gasförmigem oder flüssigem Fluid sind zum Teil beträchtlich: So können hitzeaktivierbare Klebemassen auf der Basis von Copolyamiden Wasser zu einem Anteil von einigen Masseprozent enthalten, das an das Makromolekülnetzwerk adsorbiert ist und beim Erhitzen entweichen kann.

Bekannt ist auch, aus Klebebändern der Geometrie der Klebefuge angepasste Stanzlinge herzustellen. Solche Stanzlinge haben oft geometrisch komplexe Formen, insbesondere umschließen sie oft eine nicht mit Klebeband ausgefüllte innere Fläche, sind also rahmenförmig ausgeführt. Dies ist z.B. bei der Verklebung von Displayscheiben der Fall, bei denen nur der Rand verklebt wird.

Um die zur Härtung erforderliche Wärme in kurzer Zeit einzubringen, muss derzeit mindestens einer der Fügepartner ein guter Wärmeleiter sein. Außerdem wird zur Erzielung kurzer Aufheizzeiten mit einem hohen Temperaturgradienten zwischen Heizwerkzeug und Fügeebene gearbeitet, so dass zumindest ein Fügepartner auch deutlich höheren Temperaturen widerstehen muss, als die eigentliche Aktivierung der Folie erfordert. Problematisch ist also der Einsatz für Kunststoff-Kunststoff-Verklebungen. Als Kunststoffe werden in der Konsumgüterelektronik z.B. PVC (Polyvinylchlorid), ABS (Acrylnitril-Butadien-Styrol-Copolymere), PC (Polycarbonat), PP (Poylpropylen) oder Blends basierend auf diesen Kunststoffen eingesetzt.

Zur Verklebung solcher wenig wärmeleitender oder wärmeempfindlicher Materialien, z.B. von Kunststoffen oder Gläsern, bietet es sich daher an, die hitzeaktivierbare Folie durch einen intrinsischen Mechanismus selbst zu erwärmen. Solche Mechanismen z.B. auf der Basis von elektrischer Widerstandserwärmung, magnetischer Induktion oder Mikrowellen sind bekannt (vgl. z.B. DE 22 46 858 A1)

Die Erwärmung im magnetischen Wechselfeld wird zum Einen durch induzierte Wirbelströme in elektrisch leitfähigen Rezeptoren, zum Anderen - modellhaft erklärt - durch Hystereseverluste der umklappenden Elementarmagnete im Wechselfeld erreicht. Für das Ausbilden von Wirbelströmen ist allerdings eine Mindestgröße der leitfähigen Domänen erforderlich. Diese Mindestgröße steigt, je geringer die Frequenz des Wechselfeldes ist. Je nach Rezeptormaterial treten beide Effekte gemeinsam (z.B. magnetische Metalle) oder jeweils nur ein Effekt (z.B. Aluminium: nur Wirbelströme; Eisenoxidpartikel: nur Hysterese) auf.

Induktionserwärmung wird derzeit mit sog. Mittelfrequenzen (MF, ca. 1 - 200 kHz) und mit Hochfrequenzen (HF, ca. 300 kHz - 100 MHz) durchgeführt, als Sonderfall sind auch die Mikrowellen (Standardfrequenz 2,45 GHz) zu erwähnen. Dabei steigen der technische Aufwand und damit die Kosten mit zunehmender Frequenz. Während Mittelfrequenzanlagen derzeit etwa ab 5.000 Euro zu erhalten sind, müssen für Hochfrequenzanlagen mindestens 25.000 Euro gerechnet werden. Weiterhin steigen mit zunehmender Frequenz die Sicherheitsanforderungen und somit auch die Kosten der Installation einer solchen Anlagentechnik.

Bei der Verwendung von hohen Frequenzen zur Verklebung von Bauteilen in elektronischen Geräten können zudem unerwünschte Schädigungen elektronischer Bauteile in diesen Geräten während der Beaufschlagung mit dem elektromagnetischen Wechselfeld auftreten. Insofern ist es wünschenswert, die Beaufschlagung mit dem magnetischen Wechselfeld möglichst außerhalb der elektronischen Bauteile vorzunehmen.

Die WO 2012/019909 A offenbart die Kombination eines rahmenförmigen durch elektromagnetische Induktion hitzeaktivierbaren Klebeelements und einem Induktor mit einer mit Ferritkern ausgerüsteten Spule. Insofern wird die Induktionserwärmung eines Klebeelements offenbart, nicht aber die besondere Anordnung dieses Klebeelements in Bezug auf den Induktor, dass die senkrechten Projektionen von Induktorfläche und Klebeelement nicht übereinander liegen.

Die WO 2011/05197 A offenbart ebenfalls ein Verfahren zum Verkleben von hitzeaktiviert verklebbaren Flächen, wobei eine durch elektromagnetische Induktion hitzeaktivierbare Klebefolie mittels eines Induktors, der einen Kern aufweisen kann, induktiv erwärmt wird.

Es werden keine besonderen Informationen zur geometrischen Anordnung der Klebefolie zum Induktor angegeben, insbesondere ebenfalls nicht, dass die Projektionsflächen von Klebfolie und Induktorfläche sich nicht schneiden würden.

Als Anwendungsbeispiele für die Induktionserwärmung können Fertigungsprozesse aus den Bereichen Kleben, Nahtabdichten, Härten, Anlassen u. A. dienen. Die gängige Technik dabei ist, solche Verfahren anzuwenden, bei denen die Induktoren Bauteile komplett oder teilweise umfassen und über den ganzen Umfang gleichmäßig oder beim Bedarf absichtlich ungleichmäßig erwärmen, z. B. nach EP 1 056 312 A2; DE 20 2007 003 450 U1.

In der DE 20 2007 003 450 U1 wird z.B. auch ein Verfahren zum Verschmelzen einer Behälteröffnung mit einer Siegelfolie dargestellt, bei dem die metallische Einlage einer Siegelfolie mittels Induktion erwärmt wird und durch Wärmeleitung ein Siegelkleber aufgeschmolzen wird. Die Behälter sind durch einen aufschraubbaren oder einrastbaren Deckel verschlossen, der eine Metallfolie und eine benachbart angeordnete Kunststoff-Siegelfolie enthält. Mit Hilfe der Induktionsspule werden in der Metallfolie Wirbelströme erzeugt, welche die Metallfolie erwärmen. Durch den Kontakt zwischen Metall- und Siegelfolie wird auch die Siegelfolie erwärmt und dadurch mit der Behälteröffnung verschmolzen. Tunnelförmige Induktionsspulen weisen gegenüber flachen Spulen den Vorteil auf, dass auch Behälter mit einem großen Abstand zwischen der Metallfolie und der Deckeloberkante versiegelt werden können, da die Spule von der Seite auf die Metallfolie einwirkt.

Nachteilig an diesem Verfahren ist, dass ein wesentlich größerer Teil des Bauteilvolumens als das reine Klebervolumen und die Metallfolie durch das elektromagnetische Feld geführt wird und somit im Falle eines elektronischen Bauteils Schädigungen nicht ausgeschlossen sind, da an unerwünschten Stellen Erwärmungen auftreten können. Weiterhin nachteilig ist, dass die gesamte Deckfolie aufgeheizt wird, wobei für die Verklebung nur der im Kontakt mit dem Behälter stehende Randbereich ausreichend wäre. Somit ergibt sich ein großes Verhältnis von aufgeheizter Fläche zu Verklebungsfläche, welches für typische Getränkeflaschen mit einem Öffnungsdurchmesser von 25 mm und einer Verklebungsbreite von 2 mm etwa bei 6,5 liegt. Für größere Behälterdurchmesser bei in der Regel gleichbleibender Verklebungsbreite erhöht sich das Verhältnis.

Für Kunststoff-Kunststoff-Verklebungen sind induktiv erwärmbare HAFs bekannt, welche mit im Magnetfeld aktiven Partikeln gefüllt sind, was im Mittelfrequenzbereich wenig effizient ist. Speziell die Aufheizung von mit Nanopartikeln wie MagSilica (Evonik AG) gefüllten Materialien erfordert hohe Frequenzen. Bei der Verwendung von hohen Frequenzen zur Verklebung von Bauteilen in elektronischen Geräten können zudem unerwünschte Schädigungen elektronischer Bauteile in diesen Geräten während der Beaufschlagung mit dem elektromagnetischen Wechselfeld auftreten.

Weiterhin können solche HAFs mit metallischen oder metallisierten Flächengebilden gefüllt sein. Dies ist bei der Verwendung von vollflächigen Metallfolien auch im Mittelfrequenzbereich sehr effizient, hohe Erwärmungsraten können erreicht werden, so dass Induktionszeiten zwischen 0,05 und 10 s im Stand der Technik beschrieben werden.

Dabei ist auch die Verwendung von sehr dünnen leitfähigen Folien zwischen 0,25 µm und 75 µm beschrieben (siehe z.B. US 6,849,837).

Bekannt ist auch der Einsatz von durchbrochenen Metallfolien, Drahtnetzen, Streckmetall, Metallvliesen oder Fasern, durch die das Matrixmaterial des HAF hindurchdringen kann, so dass die Kohäsion des Verbunds verbessert wird. Die Effizienz der Erwärmung nimmt dadurch allerdings ab.

Für Verklebungen innerhalb mobiler elektronischer Geräte sind mit induktiv erwärmbaren Nanopartikeln ausgestattete Produkte bekannt, die ausschließlich im Hochfrequenzbereich technisch nutzbar zu erwärmen sind. Die oben beschriebenen Nachteile der Verwendung von Partikeln und hochfrequenten Wechselfeldern treffen auch auf diese Produkte zu.

Ein Problem bei der Induktionserwärmung ist oft das über die Fläche der Klebverbindung gleichmäßige Aufheizen des Klebers. Insbesondere Stanzlinge aus einem induktiv erwärmbaren Klebeband haben oft geometrisch komplexe Formen, insbesondere umschließen sie oft eine nicht mit Klebeband ausgefüllte innere Fläche, sind also rahmenförmig ausgeführt, so dass sich leicht Überhitzungen ausbilden. Dies ist umso wahrscheinlicher, je dünner die Klebverbindung wird, da der Kleber selbst nicht mehr als Wärmekapazität überschüssige Wärme aufnehmen und verteilen kann. Bei solchen Verklebungen sind hohe Aufheizraten kaum mehr ohne lokale Überhitzungen realisierbar.

Die Aufgabe der Erfindung ist es also, ein Verfahren zur Verfügung zu stellen, mit dem hitzeaktivierte Verklebungen, insbesondere Kunststoff-Kunststoff-Verklebungen in elektronischen Geräten, mit hohen Taktraten unter Vermeidung der Nachteile des Stands der Technik, insbesondere mit verringerter Gefahr der lokalen Überhitzung, hergestellt werden können.

Die Aufgabe wird gelöst durch das Verfahren gemäß Anspruch 1, wobei die Kombination eines im Wesentlichen sich in einer ersten Ebene (E1) erstreckenden, durch elektromagnetische Induktion hitzeaktivierbaren Klebeelementes (1) mit einem elektromagnetischen Induktor (2), wobei sich die aktive Fläche des elektromagnetischen Induktors im Wesentlichen ebenfalls in einer Ebene (E2) erstreckt, wobei beide Ebenen (E1 und E2) im Wesentlichen parallel zueinander liegen oder identisch sind, wobei bei einer Blickrichtung im Wesentlichen senkrecht zu den Ebenen E1 und E2 weder
- die Projektion der aktiven Fläche des elektromagnetischen Induktors (2) in die Ebene (E1) des hitzeaktivierbaren Klebeelementes (1) eine Schnittmenge zwischen besagter Projektion und dem Umriss des hitzeaktivierbaren Klebeelementes (1) zeigt noch
- die Projektion des hitzeaktivierbaren Klebeelementes (1) in die Ebene (E2) der aktiven Fläche des elektromagnetischen Induktors (2) eine Schnittmenge zwischen besagter Projektion und dem Umriss der aktiven Fläche des elektromagnetischen Induktors (2) zeigt.

Bevorzugt ist der Induktor kein Linieninduktor.

Unter "Aktiver Fläche" eines Induktors wird die innerhalb der Ebene E2 liegende Fläche verstanden, in der der Fachmann aufgrund der Bauform des Induktors die höchste magnetische Flussdichte erwartet. Diese Erwartung ist rein geometrisch abgeleitet. Dass sich in der Praxis aufgrund eines gleitenden Abfalls der magnetischen Flussdichte mitunter nur geringe Unterschiede zwischen der Flussdichte in der geometrisch anschaulichen aktiven Fläche und angrenzend oder abseits gelegenen Flächen ergeben, soll hier nicht maßgeblich sein. Unberücksichtigt bleiben auch Induktorelemente, die von der geometrischen Grundform abweichen und im Wesentlichen der Zu- und Ableitung dienen.

Unter der aktiven Induktorfläche (aktiven Fläche des elektromagnetischen Induktors) ist bei Induktoren ohne Ferritkern oder -Ummantelung die Spulen- oder Leiterfläche zu verstehen (z.B. Induktionsspule, Tellerinduktor, Solenoid). Bei Spulen mit Ferritkern oder -Ummantelung ist die Fläche des entsprechenden Kerns bzw. der Ummantelung darunter zu verstehen (z.B. Spule mit Ferritkern, U-Induktor, Leiterschleife mit Induktionsfeldübertrager). Über diese Fläche hinausragende Spulen- oder Leiterteile werden dann nicht berücksichtigt, da das magnetische Feld durch die Kerne bzw. Ummantelungen hier konzentriert wird.

Für einige Beispiele von Induktoren ist in der folgenden Tabelle die aktive Fläche angeführt, um die Definition zu veranschaulichen:

| | **Induktorbauform** | **Aktive Fläche in E2** |
|---|---|---|
| Kernlose Induktoren | Linieninduktor (stromdurchflossener, im Wesentlichen gestreckter Leiter): | Fläche des Leiters in E2 |
| | Mäanderförmig verlegter Linieninduktor | die den Mäander in einem Vieleck (z.B. Dreieck, Viereck...) berührend umschließende Fläche |
| | Ringinduktor (einwindiger Induktor) | die Querschnittsfläche des Rings |
| | Zylinderspule (Solenoid, Wendel) | die Querschnittsfläche innerhalb der Spule (ohne den Leiterquerschnitt selbst) |
| | Mehrwindiger Induktor | die größte Querschnittsfläche innerhalb der Windungen |
| | Tellerspule (auch einwindig, wie z.B. Ringinduktor zum Erwärmen flächiger Bauteile) | die Spulenfläche in der Ebene der Spule (entspricht der Fläche innerhalb der größten Windung zuzüglich der Fläche des Leiters dieser Windung) |
| | Tunnelinduktor | die Querschnittsfläche innerhalb des Tunnels (ohne den Leiterquerschnitt selbst) |
| Induktoren mit Kern (z.B. aus Ferrit) | Einwindiger Induktor mit Kern | Fläche des Kerns in E2 |
| | Mehrwindiger Induktor mit Kern | Fläche des Kerns in E2 |
| | U-Kern-Induktor | Fläche der beiden Enden des U-Kerns |
| | | |
| | Induktoren mit Hüllelementen (z.B. aus Ferrit) | |
| | Linieninduktor mit u-förmig um den Leiter angeordnetem Induktionsfeldübertrager | Fläche des Leiters in E2 (der Übertrager verformt das Feld zu einem Ellipsoid, das sich auf die in E2 liegende Fläche des Leiters konzentriert) |

Anhand dieser Beispiele ist der Fachmann leicht in der Lage, das geometrische Prinzip der Erfindung in der Praxis umzusetzen, ohne aufwendige Messungen der magnetischen Flussdichte vornehmen zu müssen.

Gegenstand der Erfindung ist dementsprechend ein Verfahren zur Erzeugung von Verklebungen zweier Oberflächen miteinander, wobei zur Verklebung ein hitzeaktivierbares Klebeelement in einer sich zwischen den beiden Oberflächen erstreckenden Ebene (E1) eingesetzt wird, dadurch gekennzeichnet, dass zur Erwärmung des hitzeaktivierbaren Klebeelementes ein elektromagnetischer Induktor verwendet wird, der bevorzugt kein Linieninduktor ist, wobei sich die aktive Fläche des elektromagnetischen Induktors im Wesentlichen ebenfalls in einer Ebene (E2) erstreckt, wobei beide Ebenen (E1 und E2) im Wesentlichen parallel zueinander liegen oder identisch sind, wobei bei einer Blickrichtung im Wesentlichen senkrecht zu den Ebenen E1 und E2 weder
- die Projektion der aktiven Fläche des elektromagnetischen Induktors (2) in die Ebene (E1) des hitzeaktivierbaren Klebeelementes (1) eine Schnittmenge zwischen besagter Projektion und dem Umriss des hitzeaktivierbaren Klebeelementes (1) zeigt noch
- die Projektion des hitzeaktivierbaren Klebeelementes (1) in die Ebene (E2) der aktiven Fläche des elektromagnetischen Induktors (2) eine Schnittmenge zwischen besagter Projektion und dem Umriss der aktiven Fläche des elektromagnetischen Induktors (2) zeigt.

Da die vorstehend genannten Definitionen der Kombinationen und der erfindungsgemäßen Verfahren (Definition über die magnetischen Flussdichten bzw. über die aktiven Flächen) die erfinderische Lehre gleichbedeutend wiedergeben, gelten die nachfolgenden Ausführungen gleichermaßen für beide dieser Sachverhalte. Sofern im folgenden geometrische Vorteile des erfindungsgemäßen Verfahrens dargestellt werden, treffen diese auf die für das erfindungsgemäße Verfahren eingesetzte und wie vorstehend dargestellte Kombination aus hitzeaktivierbarem Klebeelementes mit elektromagnetischem Induktor entsprechend zu und sollen daher auch hierfür als offenbart gelten.

Überraschend wurde festgestellt, dass trotz nicht vorhandener Überdeckung und damit in der Regel nicht optimaler Durchdringung der Klebebandelementfläche durch die magnetischen Feldlinien die Feldstärke ausreicht, um eine ausreichende Erwärmung des Klebebandelements herzustellen.

Mit der Bezeichnung "sich im Wesentlichen in einer Ebene erstreckend" wird im Rahmen dieser Schrift der Sachverhalt berücksichtigt, dass auch solche Ausführungsformen von dem erfinderischen Gedanken umfasst sind, bei denen nicht signifikante Abweichungen von der Ausrichtung in der Ebene auftreten (z.B. durch nicht exakt planare Klebeelemente oder Abweichungen der planaren Ausformung dieser Elemente), die jedoch keinen Einfluss auf die erfinderische Lehre haben.

Die magnetische Flussdichte, auch magnetische Induktion, bisweilen umgangssprachlich einfach nur "Flussdichte" oder "Magnetfeldstärke" genannt, ist eine physikalische Größe der Elektrodynamik, die das Formelzeichen B hat und für die Flächendichte des magnetischen Flusses steht, der senkrecht durch ein bestimmtes Flächenelement hindurchtritt.

Die Messung der magnetischen Flussdichte ist mit Hilfe von Magnetometern möglich. Magnetische Flussdichten werden in der Einheit Tesla (T) gemessen, und übliche Messbereiche von Magnetometern bewegen sich in einem Größenbereich von circa 10⁻¹⁵ T bis 10 T. Wegen des großen Wertebereiches kommen unterschiedliche Messverfahren unter dem Begriff "Magnetometer" zum Einsatz. Insbesondere Hall-Sensoren finden durch ihren einfachen Aufbau (Halbleitertechnik) und die damit verbundene günstige Herstellung bei einfacheren Messaufgaben wie im Automobilsektor oder in der Automatisierungstechnik einen breiten Absatz.

Die Angaben der magnetischen Flussdichte im Rahmen dieser Schrift beziehen sich auf die Messung mit einem Hall-Sensor AS-NTP der Firma Projekt Elektronik, Berlin. Der Sensor ist geeignet, Flussdichten auch in wechselnden Magnetfeldern im Mittelfrequenzbereich bis zu einer Flussdichte von 2 T zu bestimmen. Die Messung erfolgte bei 23 °C in einer Ebene E1, die einen Abstand von einem Millimeter von der Induktoroberfläche aufweist. Bei der Messung ist kein Klebeelement innerhalb der Ebene angeordnet. Die angegebenen Messewerte geben den ermittelten Effektivwert (= quadratischer Mittelwert = RMS (Root Mean Square)) der magnetischen Flussdichte wieder.

Vorteilhaft an dem erfindungsgemäßen Verfahren ist, dass die Erwärmung mit geringeren Aufheizraten erfolgt, als bei der Platzierung des Klebebandelements im Bereich der Projektion der aktiven Induktorfläche.

Dadurch wird die Überhitzung, wie sie bei der Platzierung eines Klebebandelements im direkten Projektionsbereich leicht auftritt, vermieden.

Bevorzugt wird das erfindungsgemäße Verfahren bei Klebebandelementen mit rahmenförmiger Geometrie. Unter rahmenförmiger Geometrie ist zu verstehen, dass sich innerhalb der Fläche des Klebebands zumindest eine nicht mit dem Klebeband ausgefüllte Fläche befindet. Bevorzugt ist die größte Längenausdehnung dieser Fläche größer als die größte Breitenausdehnung der sich ergebenden Umfassungslinie.

Bevorzugt ist, dass das Klebeband eine Dicke von weniger als 70 µm, insbesondere von weniger als 50 µm, ganz besonders von weniger als 30 µm auf, da hiermit besonders dünne Klebverbindungen hergestellt werden können..

Als induktiv erwärmbare Materialien können alle dem Fachmann bekannten flächigen oder partikulären Materialien, wie sie im Stand der Technik beschrieben sind, eingesetzt werden. Bevorzugt werden elektrisch leitfähige, induktiv erwärmbare Flächengebilde eingesetzt, da diese mit niedrigen Frequenzen erwärmt werden können, was eine höhere Eindringtiefe des Magnetfelds sowie geringere Anlagenkosten zur Folge hat. Bevorzugt haben diese Flächengebilde eine Dicke von wenige als 100 µm, insbesondere weniger als 50 µm und ganz besonders weniger als 20 µm, da die Klebebänder mit abnehmender Dicke des elektrisch leitenden Flächengebildes flexibler werden und insbesondere bei sehr geringen Dicken besonders für kleinbauende mobile elektronische Geräte geeignet sind.

In einer weiteren vorteilhaften Ausführung werden beide Klebemassen so ausgewählt, dass nach einer Herstellung der Verklebung durch Erwärmung des Klebebands durch magnetische Induktion die Verklebungsfestikeit im statischen Scherversuch auf Polycarbonat größer als 1 MPa ist, bevorzugt zwischen 1 und 3 MPa liegt und ganz besonders bevorzugt größer als 4 MPa ist.

Eine sehr vorteilhafte Verfahrensführung zeichnet sich durch zumindest eines der folgenden Merkmale, sehr bevorzugt durch die Kombination beider Merkmale aus:
o Verwendung einer Frequenz zwischen 1 und 200 kHz, da bei niedrigen Frequenzen höhere Eindrigtiefe und bessere Kontrolle der Aufheizrate. Besonders bevorzugt werden bei dem Verfahren Frequenzen von 1 - 40, insbesondere von 1 - 15 kHz eingesetzt, da hierbei die wirksame Eindringtiefe des Magnetfelds weiter vergrößert ist,
   und/oder
o Aufheizung in einer Zeit von weniger als 20 s auf eine Temperatur von mehr als 70 °C.

Besonders vorteilhaft wird das Verfahren verwendet, wenn die die erwärmte Fläche kleiner als 5 cm² ist. Überraschend kann mit dem Verfahren ein unkontrolliertes Aufschmelzen der dann sehr filigranen Verklebungssubstrate vermieden werden, obwohl der Fachmann eine Überhitzung im mit dem Magnetfeld beaufschlagten Bereich erwartet hätte.

In einer besonders vorteilhaften Ausführung des Verfahrens wird während oder unmittelbar nach dem Aufheizen ein Druck mehr als 0,2 MPa auf das Klebebandelement aufgebracht, da hiermit eine Blasenbildung durch desorbierende oder in einer chemischen Reaktion entstehende Gase, insbesondere durch Wasserdampf, vermieden werden kann. Bevorzugt für hohe Vernetzungstemperaturen ist sogar ein Druck von mehr als 0,5 MPa.

In einer besonders vorteilhaften Ausführung des Verfahrens beträgt der Druck weniger als 0,2 MPa, da hiermit ein Ausquetschen von Kleber, insbesondere von thermoplastischem Kleber, aus der Klebefuge vermieden werden kann.

In einer besonders vorteilhaften Ausführung beträgt die Aufheizrate nicht mehr als 200 °C/s, , insbesondere nicht mehr als 100 °C/s, da bei höheren Aufheizraten die Gefahr der Materialschädigung des HAF oder des unkontrollierten Aufschmelzens bzw. einer thermischen Schädigung des Substrats groß ist. Eine solche Begrenzung der Aufheizrate kann z.B. mit der Verwendung von weniger elektrisch leitfähigen Metallen (z.B. Aluminium statt Kupfer oder Stahl statt Aluminium) erreicht werden. Ein weiteres technisches Mittel zur Begrenzung der Aufheizrate ist die Verwendung von durchbrochenen metallischen Flächengebilden, z.B. von Streckmetall)

In einer weiteren bevorzugten Ausführung des Verfahrens ist das elektrisch leitende Flächengebilde auch magnetisch, insbesondere ferro- oder paramagnetisch. Obwohl erwartet wurde, dass mit diesen Materialien neben der Induktion von Wirbelströmen auch eine zusätzliche Erwärmung durch Hystereseverluste auftritt, zeigten diese Materialien (z.B. Nickel, magnetische Stähle) durchweg geringere Erwärmungsraten als nicht magnetische, aber besser elektrisch leitende Metalle wie z.B. Kupfer oder Aluminium. Damit bleibt die Erwärmung kontrollierbar, jedoch wurde festgestellt, dass Erwärmungseffekte abseits der Klebefuge vermindert werden.

In einer weiteren vorteilhaften Ausführung des Verfahrens wird nach dem Erwärmen des Klebebandes der Druck aufrechterhalten, um eine Verfestigung der Klebefuge durch physikalische oder chemische Mechanismen zu ermöglichen. Vorteilhaft ist es auch, diese Nachpresszeit in einer zweiten Pressvorrichtung durchzuführen, die keinen Induktor mehr enthalten muss, um damit die Zykluszeit zu reduzieren.

In einer weiteren vorteilhaften Ausführung des Verfahrens wird in zumindest einem Teil dieser Nachpresszeit auch eine weitere Induktionserwärmung des Klebebands durchgeführt, da hiermit vorteilhaft die Temperatur in der Klebefuge aufrechterhalten werden kann. Vorteilhaft wird diese Nacherwärmung mit einer geringeren Aufheizrate durchgeführt, als die Ersterwärmung.

Dadurch, dass das Klebeband in der Geometrie der Verklebungsfläche zur Verfügung gestellt wird, wird sichergestellt, dass das Aufheizen nur in den für die Verklebung benötigten Bereichen stattfindet. Die Gefahr von thermischen Schädigungen ist somit verringert. Die Herstellung der Geometrie kann durch alle dem Fachmann geläufigen Verfahren wie z.B. Schneiden, Stanzen, Laserschneiden, Wasserstrahlschneiden erfolgen.

Als hitzeaktivierbare Klebstoffe können Schmelzklebstoffe, reaktive Klebstoffe oder reaktive Schmelzklebstoffe eingesetzt werden.

Als Schmelzklebstoff können z.B. Schmelzklebstoffe verwendet werden, die im Stand der Technik bekannt sind und die beispielsweise in DE 10 2006 042 816 A1 oder EP 1 475 424 A1 beschrieben werden. Beispielsweise kann der Schmelzklebstoff eine oder mehrere der folgenden Komponenten enthalten oder hieraus bestehen: Polyolefin, Ethylen-Vinylacetat-Copolymer, Ethylen-Ethylacrylat-Copolymer, Polyamid, Polyester, Polyurethan, Butadien-Styrol-Blockcopolymer. Bevorzugt sind diejenigen Schmelzklebstoffe, die in Absatz [0027] von EP 1 475 424 A1 angeführt sind. Weitere, insbesondere für spezielle Einsatzgebiete (wie z.B. die Verklebung auf Glas) besonders geeignete Schmelzklebstoffe sind in EP 1 956 063 A2 aufgeführt.

Vorteilhaft ist, wenn diese Klebemassen ein thermoplastisches Basispolymer umfassen. Dieses weist bereits bei geringem Anpressdruck ein gutes Fließverhalten auf, so dass sich die für die Haltbarkeit einer dauerhaften Verklebung relevante finale Klebkraft sehr schnell einstellt und daher ein schnelles Verkleben auch auf rauem oder kritischem Untergrund möglich ist.

Ebenfalls günstig ist es, wenn die Klebemasse, ein elastomeres Basispolymer und ein Modifikationsharz umfasst, wobei das Modifikationsharz ein Klebharz und/oder ein Reaktivharz umfasst. Infolge der Verwendung eines elastomeren Basispolymers ist es möglich, Klebeschichtungen mit hervorragender Dimensionsstabilität zu erhalten.

In einer bevorzugten Ausführung werden hitzeaktivierbare Folien auf Basis von Nitrilkautschuken (oder deren Derivate wie Nitrilbutadienkautschuk oder Blends) und Reaktivharzen, bevorzugt Phenolharzen, eingesetzt, wie z.B. kommerziell erhältlich tesa 8401. Der Nitrilkautschuk gibt der hitzeaktivierbaren Folie durch seine hohe Fließviskosität eine hohe Dimensionsstabilität und ermöglicht durch die Vernetzungsreaktion hohe Klebkräfte auf Kunststoffen. Hier ist das Eigenschaftsprofil über weite Bereiche steuerbar, insbesondere dann, wenn weitere Monomere wie beispielsweise Acrylsäure, sogenannte CTBN-Kautschuke, eingesetzt werden.

Statt einer solchen Klebemasse können aber auch solche Klebemassen eingesetzt werden, die 50 bis 95 Gew.-% eines verklebbaren Polymers und 5 bis 50 Gew.-% eines Epoxidharzes oder einer Mischung aus mehreren Epoxidharzen umfassen. Das verklebbare Polymer umfasst hierbei vorteilhafterweise 40 bis 94 Gew.-% Acrylsäureverbindungen und/oder Methacrylsäureverbindungen der Formel CH2=C(R1)(COOR2) (R1 stellt hierbei einen Rest dar, der ausgewählt ist aus der Gruppe umfassend H und CH3, und R2 stellt einen Rest dar, der ausgewählt ist aus der Gruppe umfassend H und Alkylketten mit 1 bis 30 Kohlenstoffatomen) und 5 bis 30 Gew.-% eines ersten copolymerisierbaren Vinylmonomers, das zumindest eine Carbonsäuregruppe und/oder Sulfonsäuregruppe und/oder Phosphonsäuregruppe aufweist, 1 bis 10 Gew.-% eines zweiten copolymerisierbaren Vinylmonomers, das zumindest eine Epoxidgruppe oder eine Säureanhydridfunktion aufweist und 0 bis 20 Gew.-% eines dritten copolymerisierbaren Vinylmonomers, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet. Eine derartige Klebemasse ermöglicht ein schnell aktivierbares Verkleben mit schnell erreichter finaler Klebkraft und stellt dabei eine gut haftende Verbindung auf unpolarem Untergrund sicher.

Schließlich ist es günstig, wenn die hitzeaktivierbare Klebemasse 40 bis 98 Gew.-% acrylathaltiges Blockcopolymer, 2 bis 50 Gew.-% eines oder mehrerer klebrigmachender Epoxidharze und/oder Novolakharze und/oder Phenolharze und 0 bis 10 Gew.-%. Härter zum Vernetzen der Epoxidharze und/oder Novolakharze und/oder Phenolharze umfassen. Eine derartige Formulierung bietet infolge der physikalischen Vernetzung innerhalb des Polymers den Vorteil, dass Klebeschichtungen mit einer großen Gesamtdicke erhalten werden können, ohne dass hierdurch die Belastbarkeit der Verklebung beeinträchtigt wird. Dadurch sind diese Klebeschichtungen geeignet, Unebenheiten im Untergrund auszugleichen. Überdies weist eine derartige Klebemasse eine gute Alterungsbeständigkeit und ein nur geringes Ausgasungsverhalten auf, was bei vielen Verklebungen im Elektronikbereich besonders erwünscht ist.

Weiterhin vorteilhaft werden auch reaktive Haftklebstoffe, insbesondere auch solche, die sich für strukturelles Kleben eignen, eingesetzt. Der Stand der Technik ist z.B. in DE 199 05 800 B4 und EP 0 881 271 B1 beschrieben.

Eine vorteilhafte Variante des Verfahrens ist es weiterhin, dass der Induktor in zumindest einem Presswerkzeug integriert ist, da hiermit das Induktionsfeld sehr nah an die Verklebungsstelle herangebracht werden kann und auch räumlich auf diese begrenzt werden kann.

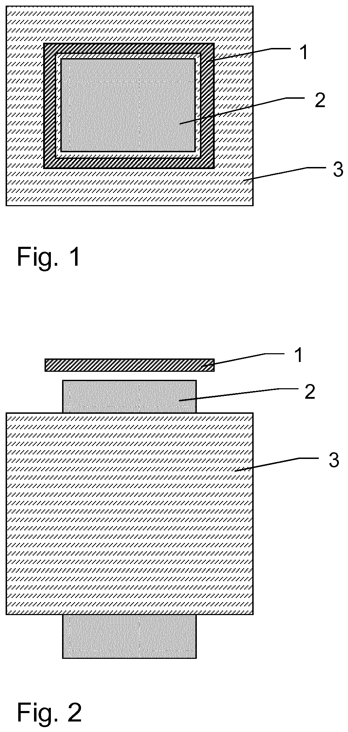

Anhand der im Folgenden dargestellten Beispiele soll die erfinderische Lehre weiter erläutert werden, ohne sich durch die Wahl der dargestellten Beispiele und Figuren unnötig beschränken zu wollen.
So zeigt Fig. 1 beispielhaft einen Aufbau zur Durchführung des erfindungsgemäßen Verfahrens. Dabei stellt die Positionsziffer 1 das rahmenförmige Klebebandelement dar, 2 einen Ferritkern, welcher von einer Spule (3) umwunden ist. Der Ferritkern ist hier der Geometrie des Klebebandelements ähnlich, liegt aber innerhalb von dessen innerer Freifläche, so dass sich die Projektion des Ferritkerns in die Ebene des Klebebandelements nicht mit diesem überdeckt.
Fig. 2 zeigt die Anordnung in der Seitenansicht. Fig. 3 zeigt ein Foto einer solchen Anordnung, mit einem rahmenförmigen ersten Verklebungssubstrat und einem scheibenförmigen zweiten Verklebungssubstrat aus 1 mm dickem Polymethylmethacrylat. Die Abmessungen des Klebebandelements betragen dabei 45 mm x 35 mm bei 2 mm Stegbreite.
Fig. 4 zeigt als Vergleichsbeispiel eine ähnliche Anordnung, bei der in nicht erfindungsgemäßer Weise die Projektion des Ferritkerns die Fläche des Klebebandelements überdeckt. Fig. 5 zeigt diese Anordnung in der Seitenansicht. Mit diesen Anordnungen wurden Vergleichsuntersuchungen vorgenommen.
   Weitere Beispiele für erfindungsgemäße Ausführungen des Verfahrens zeigen die folgenden Figuren.

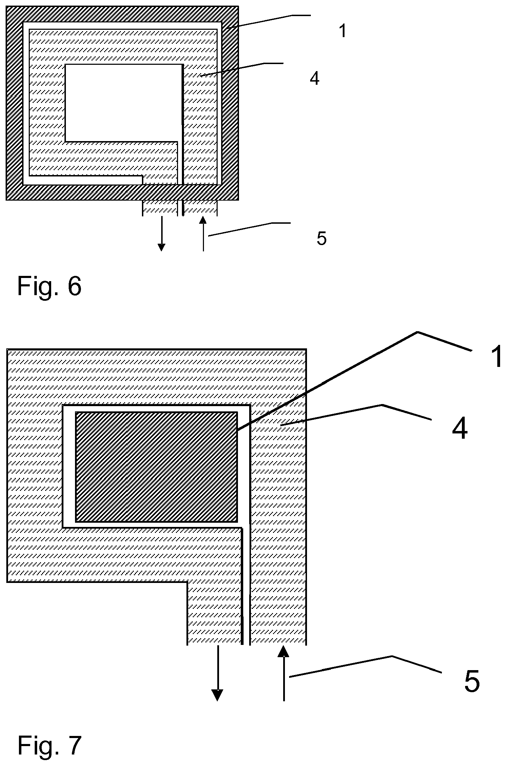

Figur 6 zeigt eine ebene Leiterschleife (4) (entspricht einer einwindigen Tellerspule), bei der das Klebebandelement (1) außerhalb der Projektionsfläche der Spule liegt (wobei die Zuleitung zur Spule mit Kühlmitteldurchfluss (5) hier naturgemäß nicht einbezogen wird).
Figur 7 zeigt eine entsprechende Anordnung mit einem innerhalb Projektionsfläche der Spule liegenden rahmenförmigen Klebebandelement.
Figur 8 zeigt eine entsprechende Anordnung mit einem innerhalb Projektionsfläche der Spule liegenden vollflächigen Klebebandelement.
Figur 9 zeigt einen U-Induktor (oben Aufsicht, unten Ansicht), bei dem ein vollfächiges Klebebandelement (1) so zwischen den Schenkelflächen des U-förmigen Ferritkerns (2) der Induktorspule (3) platziert ist, dass sich die Fläche nicht mit deren Projektionsfläche überdeckt. Die Basis des Ferritkerns zählt naturgemäß nicht zur aktiven Fläche.

### Experimentelle Untersuchungen

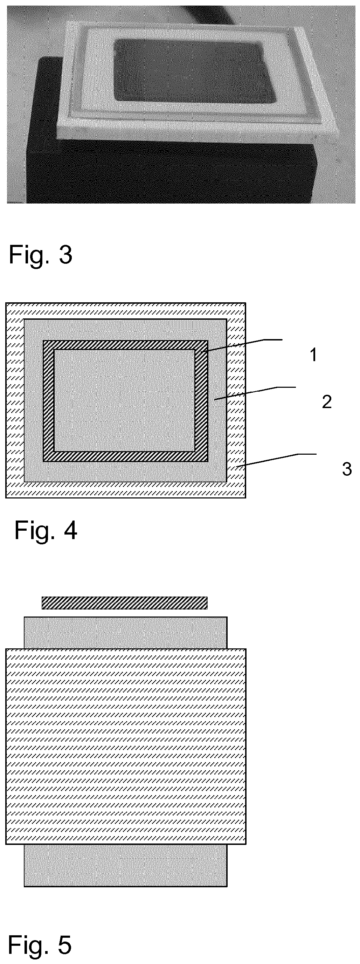

Mit dem erfindungsgemäßen Beispiel aus den Figuren 1 bis 3 sowie mit dem Vergleichsbeispiel gemäß Figuren 4 und 5 wurden folgende Untersuchungen durchgeführt:

Für die Generierung des Magnetfelds wurde eine Induktionsanlage des Typs EW5F der IFF GmbH, Ismaning, verwendet. Die verwendeten Einstellparameter sind in der folgenden Tabelle dargestellt:

| **Parameter** | **Abkürzung** | **Einheit** | **Parameter** |
|---|---|---|---|
| Frequenz | f | kHz | **30** |
| Pulsweite | PWM | % | **20** |
| Zeit | t | s | **3** |
| Dicke der Metallfolie | d | µm | **13** |
| Metall | Met | | **Aluminiumfolie** |

Die Pulsweite gibt dabei den Anteil der Pulslänge zur Summe von Pulslänge und Pausenlänge bei dem erzeugten gepulsten magnetischen Wechselfeld an.

Als hitzeaktivierbare Klebemasse wurde tesa HAF 8435 verwendet, welches eine Dicke von 30 µm aufweist. Es handelt sich hierbei um eine hitzeaktivierbare Klebemasse auf der Basis von Nitrilkautschuk und Phenolharz.

Das elektrisch leitfähige Flächengebilde war eine Aluminiumfolie mit der Dicke 13 µm. Die Metallfolie wurde beidseitig jeweils mit den Kleberschichten bei einer Temperatur von ca. 90 °C zusammenlaminiert. Dabei wird die chemische Vernetzungsreaktion noch nicht gestartet, sondern lediglich eine Haftung herbeigeführt.

Der Induktor wurde jeweils in dem Kunststoff Polyetheretherketon (PEEK) eingegossen und als unteres Werkzeug in einer Pressvorrichtung platziert.

Bezüglich des gemäß Fig. 1 vermessenen erfindungsgemäßen Beispiels kann gesehen werden, dass die geometrische Anordnung der erfindungsgemäßen Beispiels der erfindungsgemäßen Definition über die "Aktive Induktorfläche" genügt. Zudem wurde die magnetische Flussdichte mittels einees Hall-Sensors AS-NTP der Firma Projekt Elektronik, Berlin, gemessen. Die Messung erfolgte bei 23 °C in einer Ebene E1, die einen Abstand von einem Millimeter von der Induktoroberfläche aufweist. Bei der Messung war kein Klebeelement innerhalb der Ebene angeordnet. Die angegebenen Messewerte geben den ermittelten Effektivwert (= quadratischer Mittelwert = RMS (Root Mean Square)) der magnetischen Flussdichte wieder.

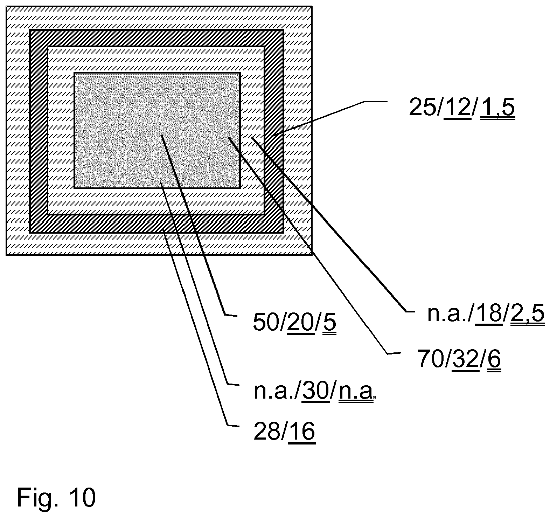

Fig. 10 zeigt die Ergebnisse der Messungen der magnetischen Flussdichte in mT (Millitesla) für den mehrwindigen Spuleninduktor mit Ferritkern aus Fig. 1. Erkennbar ist, dass die magnetische Flussdichte senkrecht zur Ebene E1 des durch den Induktor in der Ebene E1 erzeugten Magnetfelds in keinem Punkt der Fläche des Klebeelements größer ist als 50 % der maximal innerhalb der Ebene E1 senkrecht zur Ebene E1 gemessenen magnetischen Flussdichte. Die Leistungseinstellung für alle Frequenzen betrug 20 %. Dabei bedeuten:

| | |
|---|---|
| Nicht unterstrichene Werte: | Messung bei 10 kHz |
| Einfach unterstrichene Werte: | Messung bei 20 kHz |
| Doppelt unterstrichene Werte: | Messung bei 30 kHz |

[Angaben in der Form: (10kHz-Wert/20kHz-Wert/30kHz-Wert)]
Der mit der Positionsziffer 6 gekennzeichnet Bereich (schraffierte Fläche) zeigt die Lage des Klebeelements beim erfindungsgemäßen Verfahren, bei der Messung der magnetischen Flussdichte nicht zugegen.

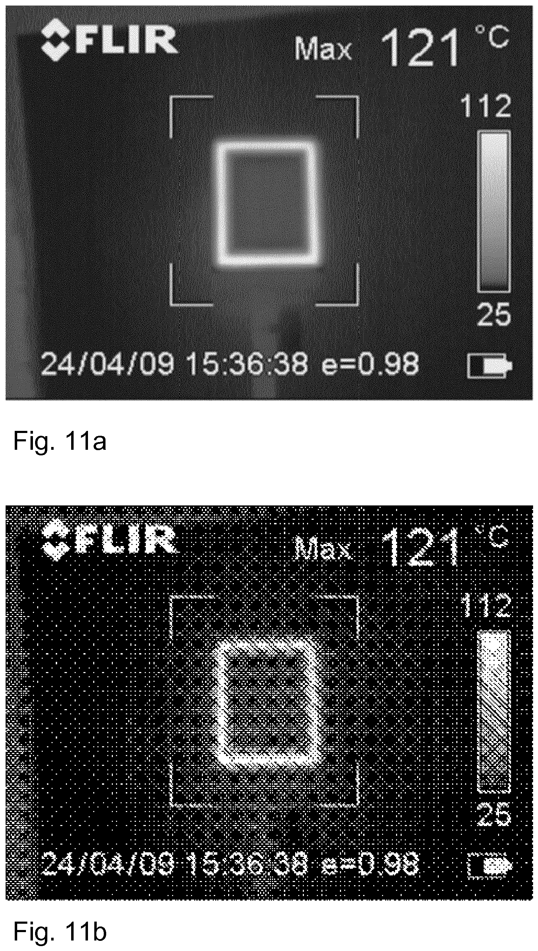

Das in Figur 11 abgebildete Infrarotbild zeigt für den erfindungsgemäßen Aufbau die Aufheizung über die gesamte Rahmenfläche nach einer Induktionszeit von 3 s, gemessen auf der Oberfläche der 1 mm dicken PMMA-Scheibe . Es ergab sich eine Aufheizrate von etwa 40 °C/s. Auch wenn im Rahmen der Abbildung des Infrarotbildes aus Druckgründen nur Schwarzweiß-Unterschiede sichtbar gemacht werden können (Figur 11a: Grauschattierungen; Fig. 11b: in Schwarzweiß konvertiertes identisches Bild), so wird doch eindeutig ersichtlich, dass sich die signifikante Erwärmung im Wesentlichen auf den Bereich des rahmenförmigen Klebebandstanzlinges (weißes Rechteck) beschränkte.

Mit dem nicht erfindungsgemäßen Aufbau gemäß Fig. 4 und 5 ergab sich eine Aufheizrate von mehr als 100 °C/s, was bei drei Sekunden Induktionszeit bereits zu einem Anschmelzen der Substrate führte. Zudem zeigte sich, dass hohe Temperaturen lokal zu Überhitzungen führten, da das System aufgrund der sehr hohen Aufheizraten nicht mehr genügend tolerant auf ungleichmäßigen Kontakt des Klebebandelements zu den Verklebungssubstraten und damit inhomogenen Wärmeableoitungsbedingungen reagierte. Das System war so für einen Produktionsprozess nicht mehr beherrschbar.

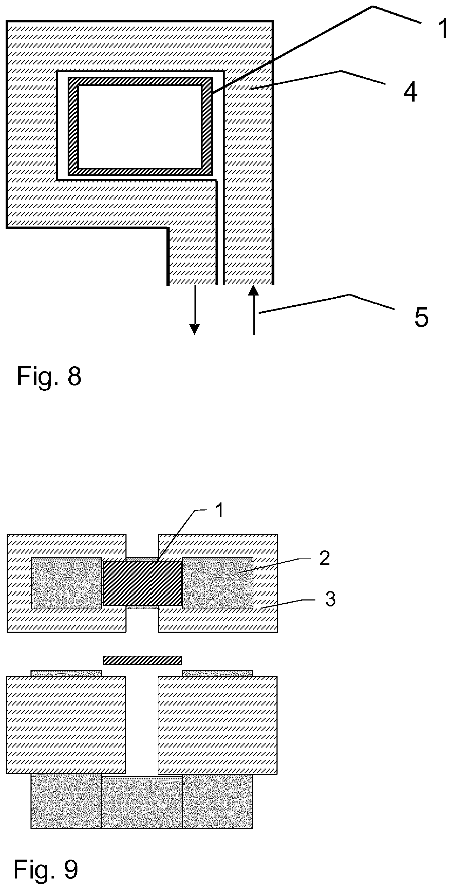

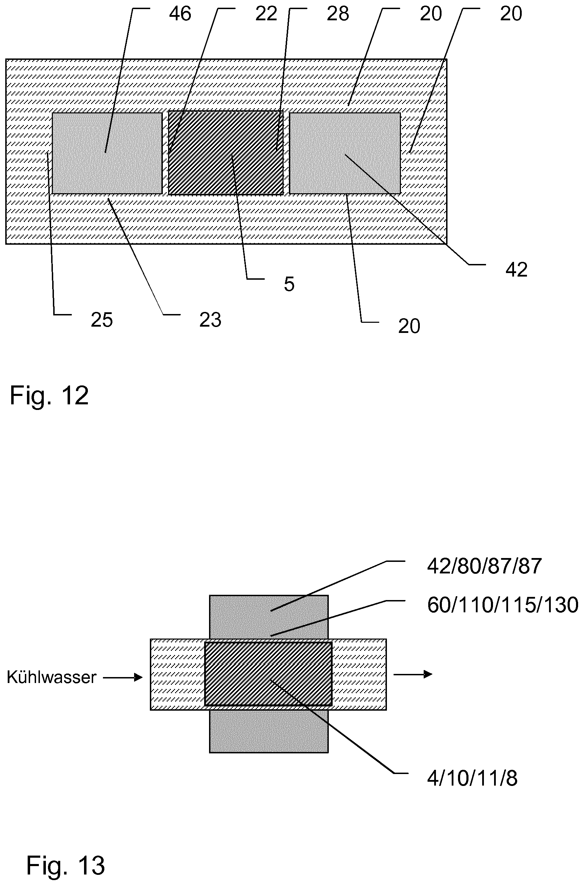

In den Figuren 12 und 13 werden beispielhaft die Messwerte der magnetischen Flussdichte für einen U-förmigen Induktor (entsprechend der Figur 9) bezüglich einer Messung bei 10 kHz, Leistungseinstellung 20 %, Angaben in mT und für einen für einen Linieninduktor bei einer Frequenz von 10 kHz und Leistungen von 20 % / 40 / 60 % / 70 % gezeigt.

## Patentansprüche

1. Verfahren zur Erzeugung von Verklebungen zweier Oberflächen miteinander, wobei zur Verklebung ein hitzeaktivierbares Klebeelement in einer sich zwischen den beiden Oberflächen erstreckenden Ebene (E1) eingesetzt wird,
**dadurch gekennzeichnet, dass**
das hitzeaktivierbare Klebeelement zumindest eine Schicht einer hitzeaktivierbaren Klebemasse sowie zumindest ein durch elektromagnetische Induktion erwärmbares Material umfasst,
zur Erwärmung des hitzeaktivierbaren Klebeelementes ein elektromagnetischer Induktor verwendet wird, wobei sich die aktive Fläche des elektromagnetischen Induktors im Wesentlichen ebenfalls in einer Ebene (E2) erstreckt, wobei beide Ebenen (E1 und E2) im Wesentlichen parallel zueinander liegen oder identisch sind, wobei bei einer Blickrichtung im Wesentlichen senkrecht zu den Ebenen E1 und E2 weder
- die Projektion der aktiven Fläche des elektromagnetischen Induktors (2) in die Ebene (E1) des hitzeaktivierbaren Klebeelementes (1) eine Schnittmenge zwischen besagter Projektion und dem Umriss des hitzeaktivierbaren Klebeelementes (1) zeigt
noch
- die Projektion des hitzeaktivierbaren Klebeelementes (1) in die Ebene (E2) der aktiven Fläche des elektromagnetischen Induktors (2) eine Schnittmenge zwischen besagter Projektion und dem Umriss der aktiven Fläche des elektromagnetischen Induktors (2) zeigt.

2. Verfahren nach Anspruch 1, **dadurch gekennzeichnet, dass**
der Induktor kein Linieninduktor ist.

3. Verfahren nach einem der vorangehenden Ansprüche, **dadurch gekennzeichnet, dass** das hitzeaktivierbare Klebeelement eine Dicke von nicht mehr als 70 µm aufweist.

4. Verfahren nach einem der vorangehenden Ansprüche, **dadurch gekennzeichnet, dass** das hitzeaktivierbare Klebeelement rahmenförmig mit zumindest einer Aussparung ist.

5. Verfahren nach einem der vorangehenden Ansprüche, **dadurch gekennzeichnet, dass** das hitzeaktivierbare Klebeelement (1) ein elektrisch leitfähiges Material enthält.

6. Verfahren nach einem der Ansprüche 2 bis 5, **dadurch gekennzeichnet, dass** als hitzeaktivierbare Klebemasse eine Schmelzklebemasse, eine Reaktivklebemasse, eine reaktive Schmelzklebemasse, oder eine reaktive Haftklebemasse eingesetzt wird.

7. Verfahren nach einem der vorstehenden Ansprüche **dadurch gekennzeichnet, dass** die Frequenz, mit der der elektromagnetische Induktor Energie zur Erwärmung des hitzeaktivierbaren Klebeelementes ausstrahlt, im Bereich von 1 bis 200 kHz liegt.

8. Verfahren nach einem der vorstehenden Ansprüche, **dadurch gekennzeichnet, dass** der Induktor in ein Presswerkzeug integriert ist.

## Claims

1. Method for producing adhesive bonds between two surfaces, wherein for the adhesive bonding a heat-activatable adhesive element is used in a plane (E1) extending between the two surfaces,
**characterized in that**
the heat-activatable adhesive element comprises at least one layer of a heat-activatable adhesive compound and at least one material that can be heated by electromagnetic induction,
an electromagnetic inductor is used for heating the heat-activatable adhesive element, wherein the active surface of the electromagnetic inductor likewise substantially extends in a plane (E2), wherein the two planes (E1 and E2) lie substantially parallel to one another or are identical, wherein, with a viewing direction substantially perpendicular to the planes E1 and E2, neither
- the projection of the active surface of the electromagnetic inductor (2) into the plane (E1) of the heat-activatable adhesive element (1) exhibits an intersection between said projection and the outline of the heat-activatable adhesive element (1)
nor
- the projection of the heat-activatable adhesive element (1) into the plane (E2) of the active surface of the electromagnetic inductor (2) exhibits an intersection between said projection and the outline of the active surface of the electromagnetic inductor (2).

2. Method according to Claim 1, **characterized in that** the inductor is not a linear inductor.

3. Method according to one of the preceding claims, **characterized in that** the heat-activatable adhesive element has a thickness of no more than 70 µm.

4. Method according to one of the preceding claims, **characterized in that** the heat-activatable adhesive element is in the form of a frame with at least one clearance.

5. Method according to one of the preceding claims, **characterized in that** the heat-activatable adhesive element (1) contains an electrically conductive material.

6. Method according to one of Claims 2 to 5, **characterized in that** a hot-melt adhesive compound, a reactive adhesive compound, a reactive hot-melt adhesive compound or a reactive pressure-sensitive adhesive compound is used as the heat-activatable adhesive compound.

7. Method according to one of the preceding claims, **characterized in that** the frequency with which the electromagnetic inductor emits energy for heating the heat-activatable adhesive element lies in the range from 1 to 200 kHz.

8. Method according to one of the preceding claims, **characterized in that** the inductor is integrated in a pressing tool.

## Revendications

1. Procédé destiné à la fabrication de joints de colle entre deux surfaces, dans lequel un élément adhésif activable thermiquement est utilisé pour le joint de colle dans un plan (E1) s'étendant entre les deux surfaces,
**caractérisé en ce que** l'élément adhésif activable thermiquement comprend au moins une couche d'une masse adhésive activable thermiquement et au moins un matériau pouvant être chauffé par induction électromagnétique,
**en ce qu'**une inductance électromagnétique est utilisée pour chauffer l'élément adhésif activable thermiquement, dans lequel la surface active de l'inductance électromagnétique s'étend également sensiblement dans un plan (E2), dans lequel les deux plans (E1 et E2) sont sensiblement parallèles l'un à l'autre ou sont identiques, dans lequel, lorsqu'on les observe dans une direction sensiblement perpendiculaire aux plans E1 et E2,
- la projection de la surface active de l'inductance électromagnétique (2) dans le plan (E1) de l'élément adhésif activable thermiquement (1) ne présente pas d'intersection entre ladite projection et le contour de l'élément adhésif activable thermiquement (1) et
- la projection de l'élément adhésif activable thermiquement (1) dans le plan (E2) de la surface active de l'inductance électromagnétique (2) ne présente pas non plus d'intersection entre ladite projection et le contour de la surface active de l'inductance électromagnétique (2) .

2. Procédé selon la revendication 1, **caractérisé en ce que** l'inductance n'est pas une inductance de ligne.

3. Procédé selon l'une des revendications précédentes, **caractérisé en ce que** l'élément adhésif activable thermiquement présente une épaisseur ne dépassant pas 70 µm.

4. Procédé selon l'une des revendications précédentes, **caractérisé en ce que** l'élément adhésif activable thermiquement présente une forme de cadre comportant au moins un évidement.

5. Procédé selon l'une des revendications précédentes, **caractérisé en ce que** l'élément adhésif activable thermiquement (1) contient un matériau électriquement conducteur.

6. Procédé selon l'une des revendications 2 à 5, **caractérisé en ce qu'**une masse adhésive thermofusible, une masse adhésive réactive, une masse adhésive thermofusible réactive ou une masse adhésive réactive sensible à la pression est utilisée en tant que masse adhésive activable thermiquement.

7. Procédé selon l'une des revendications précédentes, **caractérisé en ce que** la fréquence à laquelle l'inductance électromagnétique rayonne de l'énergie pour chauffer l'élément adhésif activable thermiquement se situe dans la plage de 1 à 200 kHz.

8. Procédé selon l'une des revendications précédentes, **caractérisé en ce que** l'inductance est intégrée à un outil de pressage.
